# EUROPÄISCHE PATENTSCHRIFT

(11) **EP 1 187 752 B1**
(45) Veröffentlichungstag und Bekanntmachung des Hinweises auf die Patenterteilung: **08.09.2004**
(21) Anmeldenummer: 00945629.4
(22) Anmeldetag: 09.06.2000
(51) Int. Cl.: B62D 1/18, B62D 1/19

(54) **LENKSÄULE UND VERSTELLVERFAHREN FÜR EINE LENKSÄULE**
STEERING COLUMN AND METHOD FOR MOVING A STEERING COLUMN
COLONNE DE DIRECTION ET PROCEDE DE REGLAGE D'UNE COLONNE DE DIRECTION

(30) Priorität: 09.06.1999 DE 29910058 U; 09.06.1999 DE 29910056 U
(43) Veröffentlichungstag der Anmeldung: 20.03.2002
(60) Teilanmeldung: 03017865.1
(73) Patentinhaber: ThyssenKrupp Presta AG, 9492 Eschen (LI)
(72) Erfinder: MÜLLER, Olaf, D-65428 Rüsselsheim (DE)
(74) Vertreter: Lindner, Manfred Klaus, Dipl.-Phys.
(86) Internationale Anmeldenummer: PCT/DE2000/001889
(87) Internationale Veröffentlichungsnummer: WO 2000/076832

(56) Entgegenhaltungen:
- WO-A-98/22325
- WO-A-98/58831
- DE-A- 19 829 237

## Beschreibung

Die Erfindung betrifft eine Lenksäule nach dem Oberbegriff des Anspruchs 1 sowie ein Verstellverfahren für eine Lenksäule nach dem Oberbegriff des Anspruchs 21.

Die auf den vorliegenden Anmelder/Inhaber zurückgehenden älteren deutschen Gebrauchsmusteranmeldungen 298 08 317.5, 299 01 657.9 und 299 00 289.6 sowie die darauf beruhende PCT-Anmeldung PCT/DE 99/01000 befassen sich allgemein mit einer Sicherheitslenksäule, einem Sicherheitssystem für ein Fahrzeug, einem Fahrzeug mit einem Sicherheitssystem sowie einem Sicherheitsverfahren, jeweils um Insassen bei einem Unfall zu schützen. Die vorliegende Erfindung betrifft Verbesserungen sämtlicher in der früheren Anmeldung behandelten Techniken und Ausführungsbeispiele insbesondere hinsichtlich der Auslösesteuerung der Lenksäule und speziell für verschiedene Insassen und Angurtzustände. Insofern ist der vollständige Offenbarungsgehalt dieser älteren Anmeldungen insbesondere hinsichtlich der Auslösesteuerung der Lenksäule und speziell für verschiedene Insassen und Angurtzustände hiermit durch die Bezugnahmen vollumfänglich in die vorliegenden Unterlagen aufgenommen.

Beispielsweise aus den genannten älteren Anmeldungen ist eine Fahrzeug-Lenksäule bekannt, die im Falle eines Unfalls so verstellt wird, dass jedenfalls das lenkradseitige Ende von einem Insassen weg bewegt wird.

Aus der gattungsgemäßen DE 198 29 237 A1 ist eine Lenkvorrichtung für ein Fahrzeug bekannt, wobei eine Lenksäule und/oder ein Lenkrad in einem Crashfall in Fahrzeugfrontrichtung verschoben wird. Diese Lenksäule ist über einen Kraftbegrenzer am Fahrzeugaufbau abgestützt. Die Kraft-Weg-Kennung des Kraftbegrenzers ist über ein Drosselventil beeinflußbar, das von einer Steuereinheit beaufschlagbar ist. Für die Beeinflussung der Kraft-Weg-Kennung des Kraftbegrenzers können unterschiedliche Parameter einzeln oder in Kombination berücksichtigt werden, wie z. B. Insassengewicht, Position eines Fahrzeugsitzes oder Rücklehnenneigung des Fahrzeugsitzes, soweit Insassenparameter betroffen sind.

Die WO 98/58831 A offenbart eine Lenksäule für ein Fahrzeug mit einer zweiteiligen Lenksäulenhalterung und einem Energiebabsorptionsmechanismus zwischen den beiden Teilen davon. Dieser Energiebabsorptionsmechanismus enthält zwei oder mehr Längsnute und ein Schneideglied, das ausgelegt ist, längs einer der Nute zu laufen, wenn eine relative Verstellung zwischen den beiden Teilen der Lenksäulenhalterung auftritt. Ferner sind Einrichtungen enthalten, um das Schneideglied auf eine vorgegebene Nut einzustellen, wobei wenigstens zwei Nute bezüglich einander unterschiedliche Deformationswiderstände haben, wodurch der Deformationswiderstand in dem Energiebabsorptionsmechanismus durch Einstellen des Schneidegliedes auf eine vorgegebene Nut eingestellt werden kann.

Ferner ist aus der WO 98/22325 A eine Lenksäule für ein Fahrzeug bekannt, wobei die Lenksäule im Fall eines Unfalls bezüglich einer Lastaufnahmestruktur verstellbar ist, und zwar unter Nutzung einer ersten Energieabsorptionseinheit zur Absorption von Energie während des Verstellens. Weiterhin ist ein Sensor zum Detektieren eines Zustandes vorgesehen, der repräsentativ dafür ist, dass ein Insasse einen Gurt angelegt hat. Ferner ist zwischen der Lenksäule und der Lastaumahmestruktur eine zweite Energieabsorptionseinheit angeordnet und ist der Sensor an eine Blockiereinheit angeschlossen, die so ausgelegt ist, dass sie, wenn der obige Zustand detektiert wird, ein Verstellen der zweiten Energieabsorptionseinheit gegenüber der Lastaumahmestruktur zuläßt, wodurch Energie absorbiert wird.

Die vorliegende Erfindung hat das Ziel, diese Lenksäule und ihr Verstellverfahren zum Schutz der Insassen weiter zu verbessern und insbesondere das Rückziehverhalten einer Lenksäule bei einem Unfall situationsabhängig und zuverlässig optimal zu gestalten.

Dieses Ziel wird mit einer Lenksäule nach dem Anspruch 1 und einem Verstellverfahren für eine Lenksäule nach dem Anspruch 21 erreicht.

Im Rahmen der Erfindung wird eine Lenksäule für ein Fahrzeug geschaffen, mit Verstelleinrichtungen, die im Falle eines Unfalls auslösbar sind, um zumindest einen Lenkrad-Endbereich der Lenksäule von einem Insassen weg zu bewegen, wobei die Verstelleinrichtungen - Lastaufnahmeeinrichtungen zum Dämpfen einer Bewegung zumindest des Lenkrad-Endbereiches der Lenksäule von einem Insassen weg enthalten und für wenigstens zwei Betriebsmodi ausgelegt sind, und wobei eine Steuerung zum Erfassen von Insassenparametern mittels Detektionseinrichtungen und Auslösen eines Betriebsmodus der Verstelleinrichtungen in Abhängigkeit von den Insassenparametern vorgesehen ist. Weiterhin ist dabei vorgesehen, dass die Lastaufnahmeeinrichtungen oder ggf. eine Stufe davon Deformationseinrichtungen mit längs eines Bewegungsweges materialdeformierenden Bolzen enthalten.

Damit kann auf unterschiedliche Umstände, wie beispielsweise einen grossen nicht angegurteten Fahrer, einen grossen angegurteten Fahrer, einen kleinen angegurteten Fahrer, etc. Rücksicht genommen und im Falle eines Unfalls eine jeweils optimale Lenksäulenverstellung durchgeführt werden.

Vorzugsweise ist bei einer erfindungsgemäßen Lenksäule ferner vorgesehen, dass die Verstelleinrichtungen Antriebseinrichtungen zum Bewirken der Bewegung zumindest des Lenkrad-Endbereiches der Lenksäule von einem Insassen weg enthalten, und dass die Antriebseinrichtungen im Falle eines Unfalls von der Steuerung in Abhängigkeit von den Insassenparametern auslösbar sind. Eine bevorzugte Weiterbildung davon besteht darin, dass die Antriebseinrichtungen einen pyrotechnischen Gasgenerator enthalten und/oder elektrisch auslösbar sind.

Gemäß einer anderen mit Vorteil einzusetzenden Fortbildung der vorliegenden Erfindung ist bei der Lenksäule vorgesehen, dass die Verstelleinrichtungen Lastaufnahmeeinrichtungen zum Dämpfen einer Bewegung zumindest des Lenkrad-Endbereiches der Lenksäule von einem Insassen weg enthalten, und dass die Lastaufnahmeeinrichtungen im Falle eines Unfalls von der Steuerung in Abhängigkeit von den Insassenparametern direkt oder indirekt betreibbar sind. Dies läßt sich vorzugsweise dadurch weiterbilden, dass die Lastaufhahmecinrichtungen wenigstens zwei Stufen enthalten, die im Falle eines Unfalls von der Steuerung in Abhängigkeit von den Insassenparametern direkt oder indirekt betreibbar sind, wobei vorzugsweise die Stufen der Lastaufnahmeeinrichtungen einzeln mit insbesondere jeweils unterschiedlichen Lastaufnahmeeigenschaften und/oder gleichzeitig mit addierten Lastaufhahmeeigenschanen betreibbar sind. Alternativ oder zusätzlich kann vorgesehen sein, dass die Lastaufnahmeeinrichtungen oder ggf. jede Stufe davon einzeln im Falle eines Unfalls von der Steuerung in Abhängigkeit von den Insassenparametern direkt oder indirekt abschaltbar sind. Weitere mit diesen Ausführungen kombinierbare Merkmale bestehen darin, dass die Lastaufnahmeeinrichtungen oder ggf. eine Stufe davon Deformationseinrichtungen, insbesondere mit längs eines Bewegungsweges spanabhebenden Schneidmessern, und/oder Bremseinrichtungen, insbesondere einen Bremsschlitten mit vorzugsweise wenigstens zwei Bremskraftstufen, enthalten.

Mit Vorzug ist die Steuerung zum Erfassen der Sitzposition, des Angurtzustandes, der Grösse, des Gewichts und/oder der Körperhaltung des Insassen mittels der Detektionseinrichtungen ausgelegt.

Bei der vorstehenden Ausführung kann die Steuerung vorzugsweise zum Auslösen der Antriebseinrichtungen in Abhängigkeit von der Sitzposition des Insassen und insbesondere zum Erfassen eines vorgebbaren Abstandes oder einer Unterschreitung eines vorgebbaren Abstandes der Position des Sitzes für den Insassen vom Lenkrad mittels der Detektionseinrichtungen ausgelegt sein. Bei letzterer Ausgestaltung ist es ferner bevorzugt, wenn die Steuerung zum Auslösen eines solchen Betriebsmodus der Verstelleinrichtungen ausgelegt ist, bei dem im Falle eines Unfalls bei einem erfaßten vorgebbaren Abstand oder einer erfaßten Unterschreitung eines vorgebbaren Abstandes der Position des Sitzes für den Insassen vom Lenkrad die Antriebseinrichtungen der Verstelleinrichtungen ausgelöst werden. Eine vorteilhafte Weiterbildung davon besteht darin, dass die Steuerung zum Betreiben der Lastaufnahmeeinrichtungen oder ggf. jeder Stufe davon einzeln in Abhängigkeit vom Angurtzustand und/oder der Sitzposition des Insassen ausgelegt ist, wobei die Steuerung insbesondere zum Auslösen eines solchen Betriebsmodus der Verstelleinrichtungen ausgelegt ist, bei dem im Falle eines Unfalls bei einem nicht angegurteten Insassen die Lastaufnahmeeinrichtungen oder zumindest eine Stufe davon wirksam sind/ist. Alternativ oder zusätzlich kann die Steuerung zum Auslösen eines solchen Betriebsmodus der Verstelleinrichtungen ausgelegt sein, bei dem im Falle eines Unfalls bei einem erfaßten vorgebbaren Abstand oder einer erfaßten Unterschreitung eines vorgebbaren Abstandes der Position des Sitzes für den Insassen vom Lenkrad die Lastaufnahmeeinrichtungen oder zumindest eine Stufe davon unwirksam sind/ist.

Es ist ferner bevorzugt, dass die Detektionseinrichtungen Positionserkennungseinrichtungen des Sitzes für den Insassen, Zustandserkennungseinrichtungen des Gurtschlosses für den Anschnallgurt des Insassen, Grössen-, Gewichts- und/oder Körperhaltungserkennungseinrichtungen bezüglich des Insassen enthalten. Dabei können die Positionserkennungseinrichtungen des Sitzes für den Insassen insbesondere wenigstens einen elektrischen oder optischen Schalter in oder im Zusammenhang mit Sitzführungsschienen enthalten, und/oder die Zustandserkennungseinrichtungen des Gurtschlosses für den Anschnallgurt des Insassen wenigstens einen elektrischen oder optischen Schloßnutzungsschalter enthalten.

Das weiter oben angegebene Ziel der vorliegenden Erfindung wird auch mit einem Verstellverfahren für eine Lenksäule eines Fahrzeuges erreicht, wobei im Falle eines Unfalls zumindest ein Lenkrad-Endbereich der Lenksäule mittels Verstelleinrichtungen von einem Insassen weg bewegt wird. Bei diesem Verfahren werden erfindungsgemäß mittels Detektionseinrichtungen Insassenparameter erfaßt und erfolgt die Bewegung zumindest des Lenkrad-Endbereiches der Lenksäule vom Insassen weg in Abhängigkeit von den Insassenparametern gemäß einem Betriebsmodus von mehreren Betriebsmodi der Verstelleinrichtungen. Ferner ist bei diesem Verfahren vorgesehen, dass, wenn die Deformationseinrichtungen wirksam sind, im Falle eines Unfalls wenigstens ein Bolzen der Deformationseinrichtungen zur bewegungsdämpfenden Lastaufnahme längs eines Bewegungsweges materialdeformierend verstellt wird.

Vorzugsweise wird dabei ein Antrieb der Verstelleinrichtungen zum Bewirken der Bewegung zumindest des Lenkrad-Endbereiches der Lenksäule vom Insassen weg im Falle eines Unfalls in Abhängigkeit von den Insassenparametern ausgelöst und/oder eine Bewegung zumindest des Lenkrad-Endbereiches der Lenksäule von einem Insassen weg im Falle eines Unfalls in Abhängigkeit von den Insassenparametern gedämpft. Gemäß einer bevorzugten Weiterbildung der letztgenannten Verfahrensvariante wird eine Dämpfung der Bewegung zumindest des Lenkrad-Endbereiches der Lenksäule von einem Insassen weg im Falle eines Unfalls in Abhängigkeit von den Insassenparametern insbesondere wahlweise in einzelnen Stufen abgeschaltet.

Bei dem erfindungsgemäßen Verfahren ist es mit Vorteil auch möglich, dass die Sitzposition, der Angurtzustand, die Grösse, das Gewicht und/oder die Körperhaltung des Insassen als Insassenparameter erfaßt werden/wird. Dabei ist es bevorzugt, dass die Verstelleinrichtungen in Abhängigkeit von der Sitzposition des Insassen angetrieben werden, wobei insbesondere die Verstelleinrichtungen im Falle eines Unfalls bei einem erfaßten vorgebbaren Abstand oder einer erfaßten Unterschreitung eines vorgebbaren Abstandes der Position des Sitzes für den Insassen vom Lenkrad gemäß einem Betriebsmodus nicht angetrieben werden. Alternativ oder zusätzlich können die Verstelleinrichtungen in Abhängigkeit vom Angurtzustand und/oder von der Sitzposition des Insassen gedämpft werden. Bei der letzteren Vorgehensweise können ferner die Verstelleinrichtungen im Falle eines Unfalls bei einem nicht angegurteten Insassen gemäß einem Betriebsmodus ganz oder teilweise gedämpft werden und/oder können die Verstelleinrichtungen im Falle eines Unfalls bei einem erfaßten vorgebbaren Abstand oder einer erfaßten Unterschreitung eines vorgebbaren Abstandes der Position des Sitzes für den Insassen vom Lenkrad gemäß einem Betriebsmodus ganz oder teilweise gedämpft werden.

Weitere bevorzugte und vorteilhafte Ausgestaltungen ergeben sich aus Kombinationen der abhängigen Ansprüche sowie aus dem gesamten Offenbarungsgehalt der vorliegenden Unterlagen.

Mit der vorliegenden Erfindung werden somit eine Lenksäule sowie ein Verstellverfahren für eine Lenksäule gemäß eingangs angegebenen älteren Anmeldungen in vorteilhafter Weise weiter verbessert.

Anhand der nachfolgend beschriebenen und in den Zeichnungen dargestellten Ausführungsund Anwendungsbeispiele wird die Erfindung näher erläutert.
- Fig. 1: zeigt schematisch Betriebsmodi von Verstelleinrichtungen eines ersten Ausführungsbeispiels einer Lenksäule,
- Fig. 2: zeigen schematisch ein Schalt- und Aufbauschema der Steuerung des ersten Ausführungsbeispiels der Lenksäule von Fig. 1,
- Fig. 3a, 3b und 3c: zeigen schematisch die Verstelleinrichtungen des ersten Ausführungsbeispiels der Lenksäule von Fig. 1 in einer Ansicht von unten (linke Hälfte von Fig. 3a) und oben (rechte Hälfte von Fig. 3a) bzw. entsprechende Querschnitte,
- Fig. 4: zeigen schematisch die Antriebseinrichtungen des ersten Ausführungsbeispiels der Lenksäule von Fig. 1,
- Fig. 5: zeigen schematisch die Lastaufnahmeeinrichtungen des ersten Ausführungsbeispiels der Lenksäule von Fig. 1, und
- Fig. 6 bis 8: zeigen schematisch in einer Querschnittsansicht ein zweites Ausführungsbeispiel einer Lenksäule vor einer Auslösung, nach einer Auslösung bei einem kleinen Insassen bzw. nach einer Auslösung bei einem grossen.

Gleiche Bezugszeichen in den einzelnen Figuren und Abbildungen der Zeichnungen bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

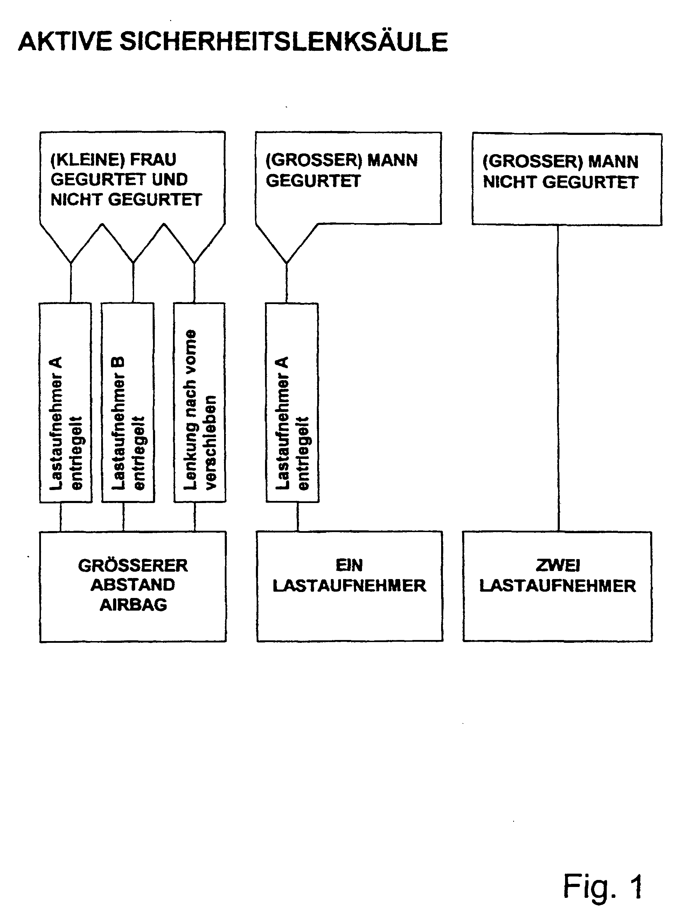

Unter Bezugnahme auf die Fig. 1, 2, 3a, 3b, 3c, 4 und 5, denen weitere Einzelheiten und Angaben zu entnehmen sind, werden nachfolgend weitere Merkmale, Funktionen und Vorteile der vorliegenden Erfindung anhand eines ersten Ausführungsbeispiels lediglich exemplarisch näher erläutert.

Dieses Ausführungsbeispiel betrifft eine aktive Sicherheitslenksäule für die drei wichtigsten Beanspruchungen im Falle eines Unfalls, wie es durch das Schema der Fig. 1 verdeutlicht wird, die den Aufbau und die Betriebsmodi für die entsprechende Lenksäule zeigt. Bei diesem ersten Ausführungsbeispiel sind entsprechend drei Anforderungen bei einem Unfall drei auf die jeweiligen Insassenparameter abgestimmte Betriebsmodi vorgesehen:
1. Mehr Airbagabstand bei kleinen Personen, indem einerseits das Lenkradende der Lenksäule infolge eines Front-Unfalls aktiv beispielsweise durch einen pyrotechnisch angetriebenen Zylinder vom Insassen wegbewegt wird, verhindert die Verletzungsgefahr solcher kleinen Personen durch den Airbag selbst, da sie sich sonst jedenfalls durch die unfallbedingte abrupte trägheitsbedingte Vorwärtsbewegung zu dem Lenkrad hin zu nahe an dem sich mit Wucht aufblasenden Airbag aufhalten würden, und andererseits Lastaufnehmer, die für Betriebsmodi für grosse Personen vorgesehen sind (siehe nachfolgend die Punkte 2. und 3.), ausser Funktion gesetzt werden;
2. Lastspitzenabbau bei großen angeschnallten Personen, indem infolge eines Front-Unfalls das Lenkradende der Lenksäule nicht aktiv vom Insassen wegbewegt wird (ein z.B. für eine aktive Rückziehung des Lenkradendes der Lenksäule vorgesehener pyrotechnisch angetriebener Zylinder wird nicht ausgelöst) und gleichzeitig dafür gesorgt wird, dass ein für diesen Anwendungsfall vorbestimmter Lastaufnehmer A zum Einsatz kommt, der beim Auftreffen des Insassen auf das Lenkrad dadurch für eine entsprechende Energieabsorption sorgt, dass eine Bewegung zumindest des Lenkradendes der Lenksäule bedingt durch das Auftreffen des Insassen mit dem Lastaufnehmer abgebremst wird; und
3. großer Lastspitzenabbau bei großen unangeschnallten Personen, indem infolge eines Front-Unfalls das Lenkradende der Lenksäule nicht aktiv vom Insassen wegbewegt wird (ein z.B. für eine aktive Rückziehung des Lenkradendes der Lenksäule vorgesehener pyrotechnisch angetriebener Zylinder wird nicht ausgelöst) und gleichzeitig dafür gesorgt wird, dass zwei für diesen Anwendungsfall vorbestimmte Lastaufnehmer A und B simultan und additiv zum Einsatz kommen, die beim Auftreffen des Insassen auf das Lenkrad dadurch für eine entsprechende Energieabsorption sorgen, dass eine Bewegung zumindest des Lenkradendes der Lenksäule bedingt durch das Auftreffen des Insassen mit den Lastaufnehmern A und B abgebremst wird.

Bei dem ersten Ausführungsbeispiel ist somit eine zweifache parallel geschaltete Lastbegrenzung vorgesehen, die in Kombination bei nicht angeschnallten großen Personen die hohe Last abbaut. Bei nicht angeschnallten schweren Fahrern ist eine wesentlich größere Lastaufnahme notwendig, als es heutzutage in der Praxis üblich ist. Heutige aus der Praxis bekannte Sicherheitslenksäulen sind beispielsweise in einem "Schlitten" (siehe Fig. 1, 2, 3a, 3b, 3c und 4 sowie zugehörige Beschreibung) gelagert. Dieser "Schlitten" bewegt sich bei Überschreitung einer konstruktiv festgelegten Lastgrenze gegen ein sich verformendes Blech, wodurch gemäß der vorliegenden Erfindung die hohe Lastspitze bei schweren Fahrern mit beiden Lastaufnehmern A und B abgebaut wird.

Bei angeschnallten großen Fahrern (erkennbar z.B. durch einen Schalter im Gurtschloß) wird bei einem Crash oder Unfall eine der beiden Lastbegrenzungen (z.B. der Lastaufnehmer A) außer Funktion gesetzt. Dies geschieht beispielsweise durch Entriegelung der Befestigung einer der Lastbegrenzungen durch einen Elektromagneten, einen pyrotechmisch entriegelbaren Bolzen o.ä.

Bei kleinen Fahrern (erkennbar z.B. durch einen Schalter in der Sitzschiene zur Lageabfrage) werden beide Lastaufnehmer A und B entriegelt und der Schlitten pyrotechnisch verfahren, um den nötigen Abstand zum explodierenden Airbag zu bekommen. Damit wird ein besonderer Vorteil der vorliegenden Erfindung erreicht.

Die Gewichtserkennung des großen Fahrers und die Positionserkennung z.B. einer kleinen Fahrerin können natürlich auch mittels elektronischer Gewichts- und Lagesensoren, die momentan vielerorts entwickelt werden, oder auf andere geeignete, dem Fachmann ohne weiteres bekannte oder zugängliche Arten ermittelt werden.

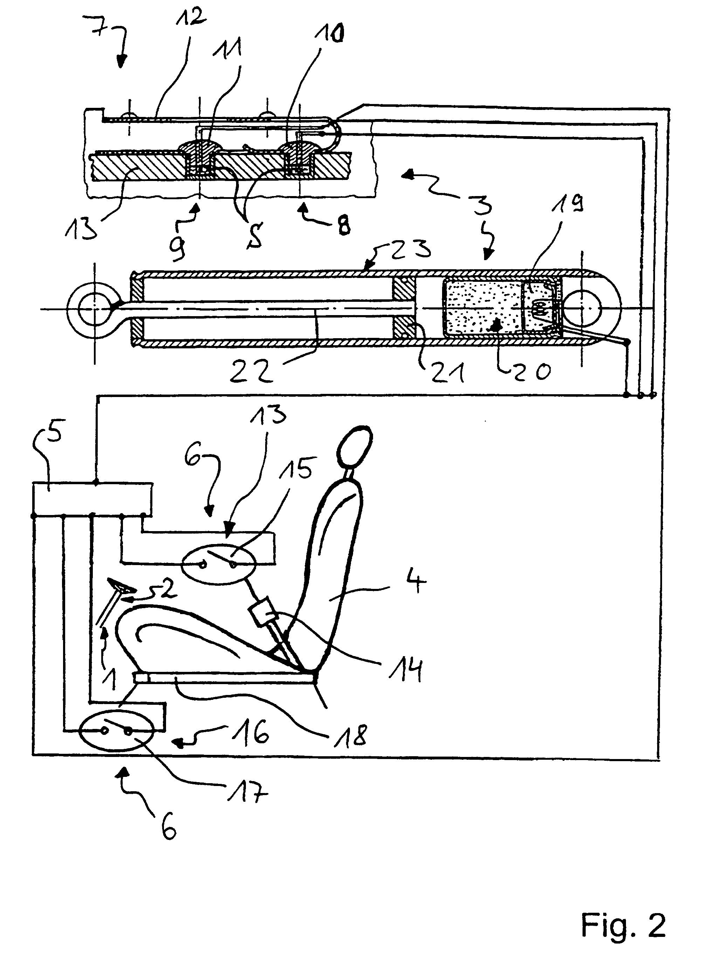

Die Fig. 2 verdeutlicht schematisch das Schaltschema des ersten Ausführungsbeispiels.

Eine nur angedeutet dargestellte Lenksäule 1 für ein Fahrzeug (nicht gezeigt) hat einen üblichen teleskopischen Aufbau, auf den wegen seiner Bekanntheit in zahlreichen Ausführungsformen hier nicht weiter eingegangen wird, da sich die vorliegende Erfindung bei allen bekannten Ausgestaltungen auch insgesamt rückziehbarer, nicht teleskopisch zusammenschiebbarer Lenksäulen anwenden läßt und die vorliegende Erfindung nicht die eigentliche Bauart solcher Lenksäulen betrifft. Die Lenksäule 1 hat einen Lenkrad-Endbereich 2 und ist mit Verstelleinrichtungen 3 versehen, die im Falle eines Unfalls auslösbar sind, um zumindest den Lenkrad-Endbereich 2 der Lenksäule 1 von einem Insassen (nicht gezeigt) weg zu bewegen, der auf einem Sitz 4 sitzt. Die Verstelleinrichtungen 3 sind für die drei in der Fig. verdeutlichten Betriebsmodi ausgelegt. Eine Steuerung 5 erfaßt mittels Detektionseinrichtungen 6 Insassenparameter und löst in Abhängigkeit von den Insassenparametern einen Betriebsmodus der Verstelleinrichtungen 3 aus.

Die Verstelleinrichtungen 3 enthalten Lastaufnahmeeinrichtungen 7 mit einem ersten und einem zweiten Lastaufnehmer oder -begrenzer 8 (A) bzw. 9 (B), die jeweils einen eigenen Bolzen 10 bzw. 11 und ein gemeinsames Lastaufnahmeblech 12 enthalten, die Deformationseinrichtungen (D) bilden. Durch die Bolzen 10 und 11 ist das Lastaufnahmeblech 12 mit einem Schlitten 13 verbunden. Das Lastaufnahmeblech 12 ist mit einem Teleskopteil (nicht gezeigt) der Lenksäule 1 fest verbunden, und der Schlitten 13 ist mit dem anderen Teleskopteil (nicht gezeigt) der Lenksäule 1 fest verbunden. Wird das Teleskopteil (nicht gezeigt) der Lenksäule 1, das den Lenkrad-Endbereich 2 enthält, durch einen auf das Lenkrad (nicht bezeichnet) auftreffenden Insassen (nicht dargestellt) belastet, so wird es in oder über das andere Teleskopteil geschoben. Diese Bewegung wird durch die Lastaufnahmeeinrichtungen 7 gedämpft, da das Lastaufnahmeblech 12 selbst und/oder gegen die Bolzen 10 und 11 verformt werden muß.

Die Bolzen 10 und 11 verfügen jeweils über eine Sprengladung S, die von der Steuerung 5, die beispielsweise verbunden ist mit oder integriert ist in einer Gesamtsteuerung (nicht gezeigt) für einen Airbag, jeweils unabhängig voneinander elektrisch gezündet werden können, um jeden der Bolzen 10 und 11 entsprechend unwirksam zu machen. An die Steuerung 5 sind als Detektionseinrichtungen 6 Zustandserkennungseinrichtungen 13 eines Gurtschlosses 14 in Form eines Gurt- oder Schloßnutzungsschalters 15 angeschlossen. Dieser Gurtnutzungsschalter 15 führt zu einem Gurtnutzungssignal, wenn der Insasse seinen Sicherheitsgurt (nicht gezeigt) vorschriftsmäßig angelegt hat. Wird das Gurtnutzungssignal nicht erzeugt, so ist die Steuerung darüber informiert, dass der Insasse nicht ordnungsgemäß angeschnallt ist.

Weiterhin sind in den Detektionseinrichtungen 6 Positionserkennungseinrichtungen 16 enthalten, die durch einen Positionsschalter 17 in einer Sitzschiene 18 des Sitzes 4 gebildet sind. Dieser Positionsschalter 17 führt zu einem Nahpositionssignal, wenn der Sitz 4 die Position des Positionsschalters 17 erreicht hat oder näher als der Positionsschalter 17 an der Lenksäule 1 ist. Dadurch erhält die Steuerung 5 die Information, dass es sich bei dem Insassen um eine kleine Person handelt. Wird das Nahpositionssignal nicht erzeugt, so ist die Steuerung darüber informiert, dass es sich bei dem Insassen um eine grosse Person handelt.

Durch die möglichen Kombinationen von Gurtnutzungssignal und Nahpositionssignal kann die Steuerung 5 jeden der drei Betriebsmodi der Verstelleinrichtungen 3 gemäß der Fig. 1 einstellen.

Hat die Steuerung 5 das Nahpositionssignal erhalten, so veranlaßt sie den Betriebsmodus für eine angeschnallte oder nicht angeschnallte "kleine Frau". In diesem Modus zündet die Steuerung 5 die Sprengladungen S der beiden Bolzen 10 und 11, so dass diese wirkungslos werden und das Lastaufnahmeblech 12 und der Schlitten 13 entkoppelt sind. Ferner zündet die Steuerung 5 einen pyrotechnischen Sprengsatz 19 eines Gasgenerators 20, und das von diesem erzeugte Gas beaufschlagt einen Kolben 21 mit einer Kolbenstange 22, die an das den Lenkrad-Endbereich 2 enthaltende Teleskopteil (nicht dargestellt) der Lenksäule 1 fest so angebunden ist, dass die beiden Teleskopteile (nicht dargestellt) der Lenksäule 5 zusammengezogen werden. Die Teile 19 bis 22 sind Bestandteile der Verstelleinrichtungen 3 und bilden zusammen Antriebseinrichtungen 23. Durch das Zusammenziehen oder Zurückziehen der Lenksäule 1 wird für die "kleine Frau", die relativ nahe am Lenkrad (nicht bezeichnet) sitzt, mehr Freiraum geschaffen, so dass sie von einem sich bei einem Unfall aufblasenden Airbag (nicht dargestellt) nicht oder zumindest nicht fest getroffen wird.

Hat die Steuerung 5 das Nahpositionssignal nicht erhalten, überprüft sie, ob das Gurtnutzungssignal gegeben ist. Liegt das Gurtnutzungssignal vor, so veranlaßt die Steuerung 5 den Betriebsmodus für einen angeschnallten "grossen Mann". In diesem Modus zündet die Steuerung 5 die Sprengladung S nur des Bolzens 11, so dass nur dieser wirkungslos wird und das Lastaufnahmeblech 12 und der Schlitten 13 noch durch den Bolzen 10 gekoppelt sind. Der Lastaufnehmer 8 (A) ist damit wirksam, um Energie abzubauen, die beim Aufprall des angeschnallten "grossen Mannes" auf das Lenkrad (nicht bezeichnet) auftritt. Die Antriebseinrichtungen 23 werden nicht ausgelöst.

Erhält die Steuerung 5 weder das Nahpositionssignal noch das Gurtnutzungssignal erhalten, so veranlaßt die Steuerung 5 den Betriebsmodus für einen unangeschnallten "grossen Mann". In diesem Modus zündet die Steuerung 5 keine Sprengladung S, so dass das Lastaufnahmeblech 12 und der Schlitten 13 durch beide Bolzen 10 und 11 gekoppelt sind. Der Lastaufnehmer 8 (A) und der Lastaufnehmer 9 (B) sind damit wirksam, um Energie abzubauen, die beim Aufprall des unangeschnallten "grossen Mannes" auf das Lenkrad (nicht bezeichnet) auftritt. Die Antriebseinrichtungen 23 werden nicht ausgelöst.

Signalleitungen zwischen der Steuerung 5 und den Sprengladungen S, dem pyrotechnischen Sprengsatz 19 sowie den Detektionseinrichtungen 6 sind als Linien oder Striche in der Fig. 2 eingezeichnet.

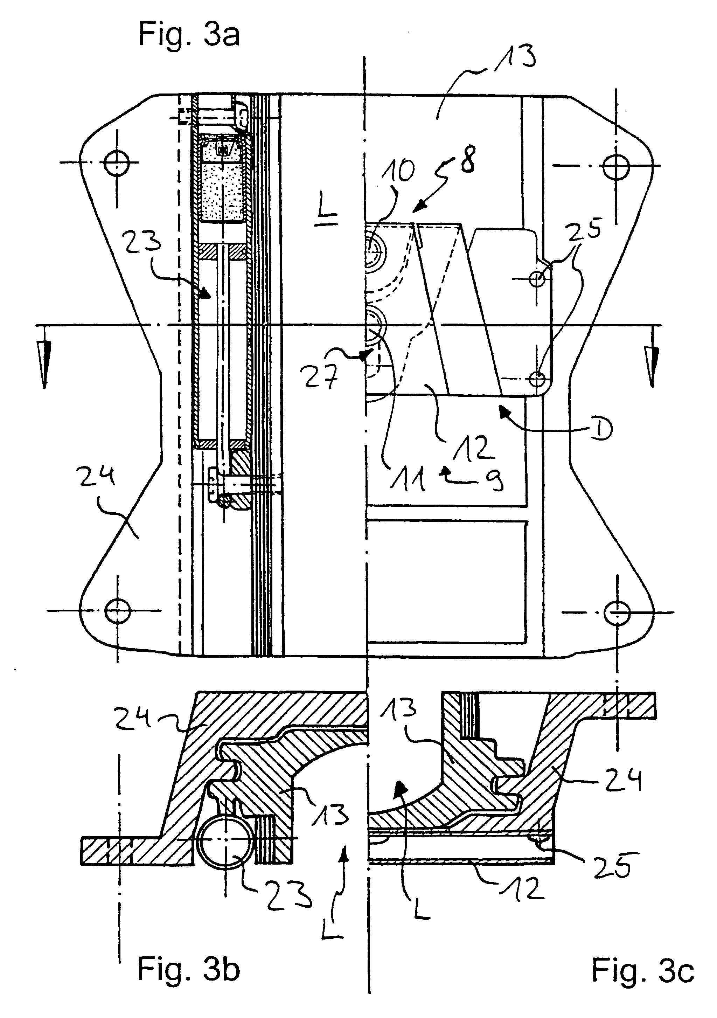

Die Fig. 3a, 3b und 3c zeigen einen Schlitten 13 zur Aufnahme der Lenkung (nicht gezeigt) in seiner Schlittenaufnahme 24 in der Fig. 3a links von unten und rechts von oben und in den Fig. 3b und 3c jeweils geschnitten. Der pyrotechnische Gasgenerator 20 der Antriebseinrichtungen 23 ist einerseits an der Schlittenaufnahme 24 und andererseits am Schlitten 13 befestigt.

Auf der rechten Seite der Fig. 3a sind der Lastaufnehmer 8 (A) und der Lastaufnehmer 9 (B) einstückig in Einbaulage gezeigt. Die Lastaufnehmer 8 und 9 sind einerseits mit den Bolzen 10 bzw. 11 am Schlitten 13 und andererseits an der Schlittenaufnahme 24 mit Verschraubungen 25 versehen. Der verschiebbare Teleskopteil (nicht gezeigt) der Lenksäule 1 wird in der Ausnehmung L fest montiert.

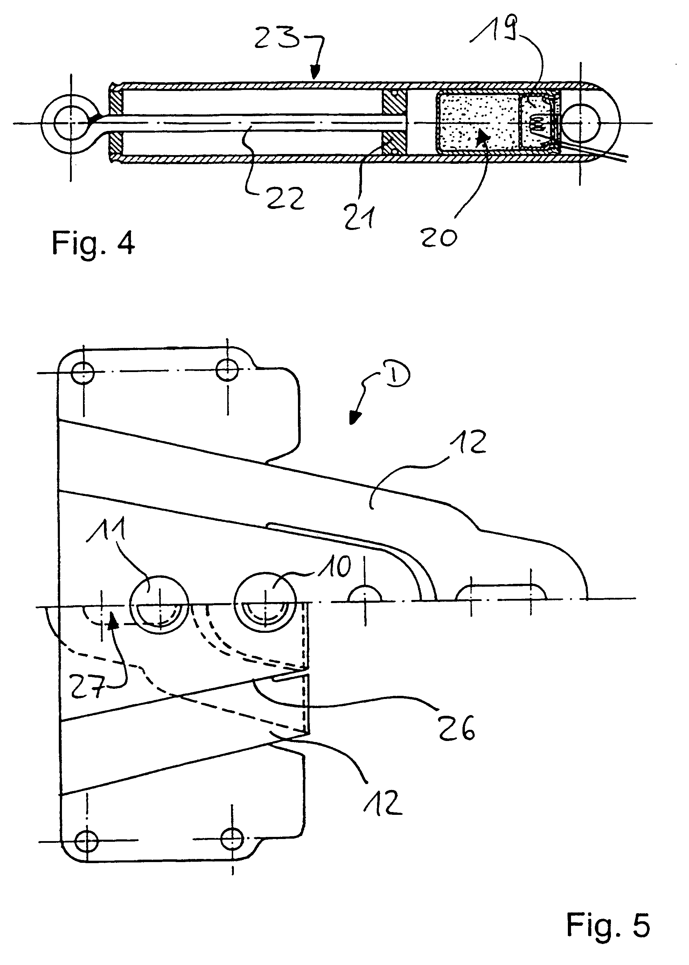

Die Antriebseinrichtungen 23 sind in der Fig. 4 gesondert dargestellt, wie sie bereits im Zusammenhang mit der Fig. 2 erläutert wurden.

Die Fig. 5 zeigt oben vor, d.h. in einem einbaufertigen Zustand, und unten nach einer Betätigung beider Lastaufnehmer 8 und 9 das Lastaufnahmeblech 12, bei dem es sich um ein Stanzteil handelt.

Als weitere erfinderische Besonderheit ist der Lastbegrenzer 8 (A) derart gestaltet, daß er mittels des Bolzens 10 sofort bei einer Lastüberschreitung an Reißlinien 26 einreißt. Dabei schiebt sich das Ende des Lastbegrenzers 8 (A) zwangsläufig über den Lastbegrenzer 9 (B), dessen Bolzen 11 sich vorerst in einem Schlitz 27 des Lastbegrenzers 9 (B) bewegt. Diese Auslegung führt in vorteilhafter Weise dazu, daß sich die Ausreißkräfte der beiden Lastaufnehmer 8 (A) und 9 (B) addieren. Würden sie parallel nebeneinander einreißen, würde nur einer der beiden Lastaufnehmer A oder B arbeiten.

Durch die Erfindung wird somit gemäß des ersten Ausführungsbeispiels insbesondere eine Sicherheitslenksäule mit einem Crashschlitten geschaffen, der zwei Lastaufnehmer hat, für angeschnallte und nicht angeschnallte große und kleine Personen. Gemäß einer bevorzugten Weiterbildung dieser Ausführung erfolgt eine Steuerung mit einem Schloßnutzungsschalter. In weiterer Fortbildung der Erfindung wird der Crashschlitten für die kleine Personen als "Abstandsschlitten" genutzt und werden seine Lastaufnehmer außer Betrieb gesetzt. Eine Feststellung kleiner Personen kann bevorzugt über eine elektrische Sitzlageerkennung erfolgen.

Besonders bevorzugt ist es gemäß der vorliegenden Erfindung, wenn die Lastaufnehmer derart hintereinander laufend gebaut sind, z.B. mittels eines Schlitzes in einer Anbindung, zum verzögerten Anlauf, daß sich die Lastaufnahmen bei der Last addieren.

Lediglich der Vollständigkeit halber wird noch darauf hingewiesen, dass die beiden Teleskopteile, wie z.B. ineinander gesteckte Rohre, der Lenksäule 1 im Normalbetrieb zwar einerseits fixiert sind, so dass sie nicht ohne weiteres zusammengeschoben werden können, dass aber diese Fixierung andererseits so schwach ist (z.B. Kunststoffbolzen), dass dadurch erstens keine merkliche Lastaufnahme für einen grossen (unangeschnallten) Fahrer erreicht werden kann, und zweitens der Rückzug der Lenksäule durch die Antriebseinrichtungen bei einem kleinen (angeschnallten) Fahrer nicht spürbar behindert wird. Dies gilt für das bereits erläuterte Ausführungsbeispiel ebenso, wie für das nachfolgend erläuterte zweite Ausführungsbeispiel.

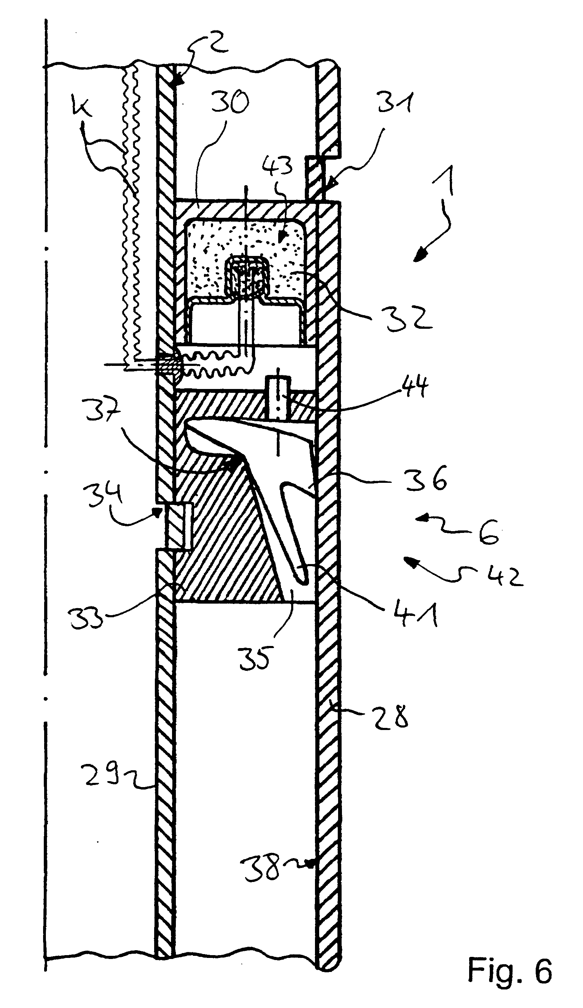

Unter Bezugnahme auf die Fig. 6 bis 8, denen weitere Einzelheiten und Angaben zu entnehmen sind, werden nachfolgend weitere Merkmale, Funktionen und Vorteile der vorliegenden Erfindung anhand eines zweitens Ausführungsbeispiels lediglich exemplarisch näher erläutert. Insbesondere betrifft dieses Ausführungsbeispiel eine Sicherheitslenksäule mit pyrotechnisch angetriebener Verkürzung bei kleinen Fahrern und Lastspitzenabbau bei großen Fahrern. Heutige Lenksäulen sind zum Teil als Ergänzung zu einem Airbag bereits mit einem Lastspitzenabbau für schwere Personen ausgerüstet. Die Praxis hat ferner gezeigt, daß kleine und zu dicht am Airbag positionierte Fahrer teilweise durch diesen zu Tode kommen. Das zweite Ausführungsbeispiel schafft ebenfalls eine Lösung zum Lastspitzenabbau bei großen Fahrern und im gleichen System eine Lenksäulenverkürzung bei kleinen Fahrern bei einem Unfall.

Die Fig. 6 bis 8 zeigen ein Lenksäulenaussenrohr 28 und ein Lenksäuleninnenrohr 29, die die Teleskopteile einer Lenksäule 1 darstellen, wobei das Lenksäuleninnenrohr 29 den Lenkrad-Endbereich 2 der Lenksäule 1 enthält. An dem Lenksäulenaussenrohr 28 ist ein Aussenrohr-Ringkolben 30 beispielsweise durch eine Verclinchverbindung 31 befestigt. Der Aussenrohr-Ringkolben 30 enthält eine pyrotechnische Patrone 32, die mit Steuerkabeln K mit der Steuerung 5 (vergleiche Fig. 2) verbunden ist. Mit dem Lenksäuleninnenrohr 29 ist ein Innenrohr-Ringkolben 33 fest durch ebenfalls eine Verclinchverbindung 34 verbunden. Dieser Innenrohr-Ringkolben 33 enthält beim zweiten Ausführungsbeispiel ein oder mehrere in Schlitzen 35 gelagerte, entsprechend geformte Schneidemesser 36 als Teile von Deformationseinrichtungen 6. Die Schneidemesser 36 sind derart auf einem "Kipppunkt" 37 gelagert, daß sie bei Antrieb über den Innenrohr-Ringkolben 33 gezielt in die Wandung 38 des Lenksäulenaussenrohrs 28 der Lenksäule 1 einschneiden. Die Schneidtiefe 39 des Spanes 40 wird durch einen entsprechend geformten Anschlag 41 bestimmt. Die Größe des Spanes 40 ist proportional der gewünschten Lastaufnahme. Die Deformationseinrichtungen 6 bilden Lastaufnahmen 42.

Der Aussenrohr-Ringkolben 30 und der Innenrohr-Ringkolben 33 bilden Antriebseinrichtungen 23, die ebenso wie die Lastaufnahmen 42 Bestandteile der Verstelleinrichtungen 3 der Lenksäule 1 sind.

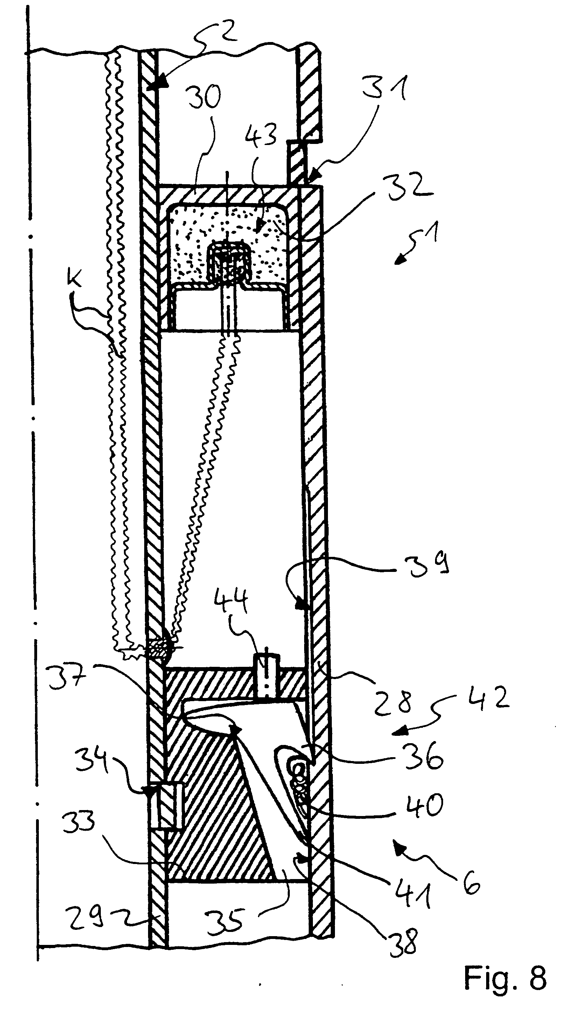

Die Fig. 8 zeigt eine entsprechende Lastaufnahme 42 in Funktion. Die Lastaufnahme 42

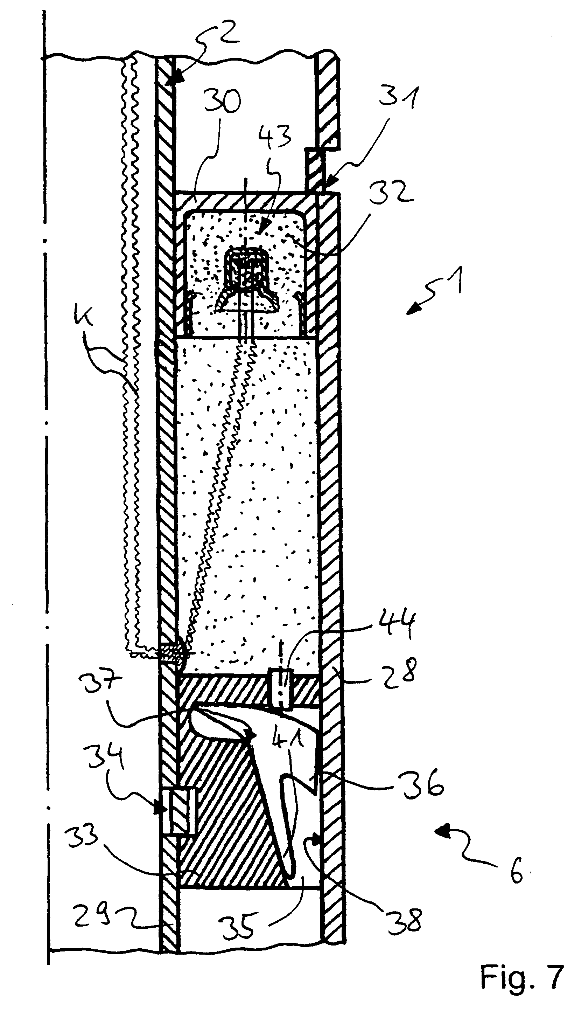

Die Fig. 7 zeigt die Funktion bei kleinen Fahrern. Hier drückt die Ladung 43 der pyrotechnische Patrone 32 den Innenrohr-Ringkolben 33 verbunden mit dem Lenksäuleninnenrohr 29 nach unten und damit von einem Insassen (nicht gezeigt) weg. Gleichzeitig verhindert ein vom Druck beaufschlagter Steuerstift 44 das Kippen des Schneidemessers 36 in die Stellung "Lastaufnahme", d.h. zur Spanabhebung in der Wandung 38 des Lenksäulenaussenrohrs 28 der Lenksäule 1.

Zusammenfassend läßt sich das in den Fig. 6 bis 8 verdeutlichte Ausführungsbeispiel der vorliegenden Erfindung folgendermaßen erläutern:

Ineinander schiebbare Lenksäulenrohre sind mit "Ringkolben" versehen, die bei kleinen Fahrem mittels eines pyrotechnischen Druckaufbaues dazwischen die Lenksäule verkürzen und damit einen sich aufblasenden Airbag auf eine größere Distanz bringen. In einem der Ringkolben ist eine lastaufnehmende Mechanik eingebaut, die bei großen Fahrern anstelle der Lenksäulenverkürzung wirksam wird und bei kleinen Fahrern mittels pyrotechnischem Druck außer Funktion gesetzt wird. Der zweite Ringkolben ist mit einer Lastaufnahmemechanik versehen. Im gezeigten Beispiel handelt es sich um entsprechend geformte und gelagerte kippbare Messer. Es kann sich hier ebenso um Wellrohre, materialverformende Kugeln o.ä. handeln (in den Figuren nicht gezeigt). Grundsätzlich ist die Funktion des lastaufnehmenden Ringkolbens derart, daß er automatisch Last aufnimmt und abbaut, wenn das innere Lenksäulenrohr relativ zum äußeren bewegt wird. Im gezeigten Fall wird das Messer spanabhebend in das äußere Lenksäulenrohr gedrückt. Alternativ kann diese Lastaufnahme bei einer pyrotechnischen Zündung bei entsprechender Leistung "überspielt" werden, oder wird das "Messer" wie im Beispiel durch einen druckbeaufschlagten Steuerstift außer Funktion gekippt.

Bei der Lenksäule eines Automobiles ist das innere und äußere Lenksäulenrohr beispielsweise auf möglichst großen Durchmesserunterschied ausgelegt. Wie es heute u.a. üblich ist, wird das äußere Lenksäulenrohr in Lagern positioniert (in den Figuren nicht gezeigt). Das innere Lenksäulenrohr ist zum äußeren formschlüssig mit entsprechenden Ringkolben (Nuten/Form) verbunden. Das Ringkolbenpaar ist z.B. durch Verclinchen mit je einem äußeren und je einem inneren Rohr verbunden. Ein Ringkolben beinhaltet eine pyrotechnische Ladung, deren Druck die Ringkolben voneinander weg drücken und damit die Lenksäule verkürzen bzw. das Lenkrad in Fahrtrichtung nach vom vom Insassen weg ziehen kann.

Kleine Fahrer können auch bei dem zweiten Ausführungsbeispiel festgestellt werden z.B. durch entsprechende elektronische Überwachungssysteme oder eine Sitzpositionserkennung mittels Schaltern in der Sitzschiene.

## Patentansprüche

1. Lenksäule für ein Fahrzeug, mit Verstelleinrichtungen (3), die im Falle eines Unfalls auslösbar sind, um zumindest einen Lenkrad-Endbereich (2) der Lenksäule (1) von einem Insassen weg zu bewegen, wobei die Verstelleinrichtungen (3) Lastaufnahmeeinrichtungen (7) zum Dämpfen einer Bewegung zumindest des Lenkrad-Endbereiches (2) der Lenksäule (1) von einem Insassen weg enthalten und für wenigstens zwei Betriebsmodi ausgelegt sind, und wobei eine Steuerung (5) zum Erfassen von Insassenparametern mittels Detektionseinrichtungen (6) und Auslösen eines Betriebsmodus der Verstelleinrichtungen (3) in Abhängigkeit von den Insassenparametern vorgesehen ist,
**dadurch gekennzeichnet,**
**dass** die Lastaufnahmeeinrichtungen (7) Deformationseinrichtungen (6) enthalten, die mittels der Steuerung (5) in Abhängigkeit von den Insassenparametern zur Realisierung eines bestimmten Betriebsmodus der Verstelleinrichtungen (3) in oder ausser Wirkung gebracht sind, und
**dass** die Deformationseinrichtungen (6) längs eines Bewegungsweges materialdeformierende Bolzen (10, 11) enthalten.

2. Lenksäule nach Anspruch 2, **dadurch gekennzeichnet,**
**dass** die Verstelleinrichtungen (3) Antriebseinrichtungen (23) zum Bewirken der Bewegung zumindest des Lenkrad-Endbereiches (2) der Lenksäule (1) von einem Insassen weg enthalten, und
**dass** die Antriebseinrichtungen (23) im Falle eines Unfalls von der Steuerung (5) in Abhängigkeit von den Insassenparametern auslösbar sind.

3. Lenksäule nach Anspruch 2, **dadurch gekennzeichnet, dass** die Antriebseinrichtungen einen pyrotechnischen Gasgenerator (20; 32) enthalten und/oder elektrisch auslösbar sind.

4. Lenksäule nach einem der Ansprüche 1 bis 3, **dadurch gekennzeichnet,**
**dass** die Verstelleinrichtungen (3) Lastaumahmeeinrichtungen (7) zum Dämpfen einer Bewegung zumindest des Lenkrad-Endbereiches (2) der Lenksäule (1) von einem Insassen weg enthalten, und
**dass** die Lastaufnahmeeinrichtungen (7) im Falle eines Unfalls von der Steuerung (5) in Abhängigkeit von den Insassenparametern direkt oder indirekt betreibbar sind.

5. Lenksäule nach Anspruch 4, **dadurch gekennzeichnet, dass** die Lastaufnahmeeinrichtungen (7) wenigstens zwei Stufen (A, B) enthalten, die im Falle eines Unfalls von der Steuerung (5) in Abhängigkeit von den Insassenparametern direkt oder indirekt betreibbar sind,

6. Lenksäule nach Anspruch 5, **dadurch gekennzeichnet, dass** die Stufen (A, B) der Lastaufnahmeeinrichtungen (7) einzeln oder gleichzeitig mit addierten Lastaufnahmeeigenschaften betreibbar sind.

7. Lenksäule nach Anspruch 6, **dadurch gekennzeichnet, dass** die Stufen (A, B) der Lastaufnahmeeinrichtungen (7) jeweils unterschiedliche Lastaumahmeeigenschaften aufweisen.

8. Lenksäule nach einem der Ansprüche 4 bis 7, **dadurch gekennzeichnet, dass** die Lastaufnahmeeinrichtungen (7) oder ggf. jede Stufe (A, B) davon einzeln im Falle eines Unfalls von der Steuerung (5) in Abhängigkeit von den Insassenparametern direkt oder indirekt abschaltbar sind.

9. Lenksäule nach einem der Ansprüche 4 bis 8, **dadurch gekennzeichnet, dass** die Lastaufnahmeeinrichtungen (7) oder ggf. eine Stufe (A, B) davon Deformationseinrichtungen (6) mit längs eines Bewegungsweges spanabhebenden Schneidmessem (36) enthalten, und/oder Bremseinrichtungen enthalten.

10. Lenksäule nach Anspruch 9, **dadurch gekennzeichnet, dass** die Bremseinrichtungen einen Bremsschlitten enthalten.

11. Lenksäule nach Anspruch 10, **dadurch gekennzeichnet, dass** der Bremsschlitten wenigstens zwei Bremskraftstufen aufweist.

12. Lenksäule nach einem der vorhergehenden Ansprüche, **dadurch gekennzeichnet, dass** die Steuerung (5) zum Erfassen der Sitzposition, des Angurtzustandes, der Grösse, des Gewichts und/oder der Körperhaltung des Insassen mittels der Detektionseinrichtungen (6) ausgelegt ist.

13. Lenksäule nach Anspruch 12 in Verbindung mit einem der Ansprüche 2 oder 3, **dadurch gekennzeichnet, dass** die Steuerung (5) zum Auslösen der Antriebseinrichtungen (23) in Abhängigkeit von der Sitzposition des Insassen ausgelegt ist.

14. Lenksäule nach Anspruch 13, **dadurch gekennzeichnet, dass** die Steuerung (5) zum Erfassen eines vorgebbaren Abstandes oder einer Unterschreitung eines vorgebbaren Abstandes der Position des Sitzes (4) für den Insassen vom Lenkrad mittels der Detektionseinrichtungen (6) ausgelegt ist.

15. Lenksäule nach Anspruch 14, **dadurch gekennzeichnet, dass** die Steuerung (5) zum Auslösen eines solchen Betriebsmodus der Verstelleinrichtungen (3) ausgelegt ist, bei dem im Falle eines Unfalls bei einem erfaßten vorgebbaren Abstand oder einer erfaßten Unterschreitung eines vorgebbaren Abstandes der Position des Sitzes (4) für den Insassen vom Lenkrad die Antriebseinrichtungen (23) der Verstelleinrichtungen (3) ausgelöst werden.

16. Lenksäule nach Anspruch 14 oder 15 in Verbindung mit einem der Ansprüche 4 bis 11, **dadurch gekennzeichnet, dass** die Steuerung (5) zum Betreiben der Lastaufnahmeeinrichtungen (7) oder ggf. jeder Stufe (A, B) davon einzeln in Abhängigkeit vom Angurtzustand und/oder der Sitzposition des Insassen ausgelegt ist.

17. Lenksäule nach Anspruch 16, **dadurch gekennzeichnet, dass** die Steuerung (5) zum Auslösen eines solchen Betriebsmodus der Verstelleinrichtungen (3) ausgelegt ist, bei dem im Falle eines Unfalls bei einem nicht angegurteten Insassen die Lastaufnahmeeinrichtungen (7) oder zumindest eine Stufe (A, B) davon wirksam sind/ist.

18. Lenksäule nach Anspruch 16 oder 17, **dadurch gekennzeichnet, dass** die Steuerung (5) zum Auslösen eines solchen Betriebsmodus der Verstelleinrichtungen (3) ausgelegt ist, bei dem im Falle eines Unfalls bei einem erfaßten vorgebbaren Abstand oder einer erfaßten Unterschreitung eines vorgebbaren Abstandes der Position des Sitzes (4) für den Insassen vom Lenkrad die Lastaufhahmeeinrichtungen (7) oder zumindest eine Stufe (A, B) davon unwirksam sind/ist.

19. Lenksäule nach einem der vorhergehenden Ansprüche, **dadurch gekennzeichnet, dass** die Detektionseinrichtungen (6) Positionserkennungseinrichtungen (16) des Sitzes (4) für den Insassen, Zustandserkennungseinrichtungen (13) des Gurtschlosses (14) für den Anschnallgurt des Insassen, Grössen-, Gewichts- und/oder Körperhaltungserkennungseinrichtungen bezüglich des Insassen enthalten.

20. Lenksäule nach Anspruch 19, **dadurch gekennzeichnet, dass** die Positionserkennungseinrichtungen (16) des Sitzes (4) für den Insassen wenigstens einen elektrischen oder optischen Schalter (17) in oder im Zusammenhang mit Sitzführungsschienen (18) enthalten, und/oder dass die Zustandserkennungseinrichtungen (13) des Gurtschlosses (14) für den Anschnallgurt des Insassen wenigstens einen elektrischen oder optischen Schloßnutzungsschalter (15) enthalten.

21. Verstellverfahren für eine Lenksäule (1) eines Fahrzeuges,
wobei im Falle eines Unfalls zumindest ein Lenkrad-Endbereich (2) der Lenksäule (1) mittels Verstelleinrichtungen (3) von einem Insassen weg bewegt wird,
wobei mittels Detektionseinrichtungen (6) Insassenparameter erfaßt werden, und
wobei die Bewegung zumindest des Lenkrad-Endbereiches (2) der Lenksäule (1) vom Insassen weg mittels einer Steuerung (5) in Abhängigkeit von den Insassenparametem gemäß einem Betriebsmodus von mehreren Betriebsmodi der Verstelleinrichtungen (3) erfolgt,
**dadurch gekennzeichnet,**
**dass** zur Realisierung eines bestimmten Betriebsmodus der Verstelleinrichtungen (3) mittels der Steuerung (5) in Abhängigkeit von den Insassenparametern Deformationseinrichtungen (6) zur bewegungsdämpfenden Lastaufnahme in oder ausser Wirkung gebracht werden, und
**dass**, wenn die Deformationseinrichtungen wirksam sind, im Falle eines Unfalls wenigstens ein Bolzen (10, 11) der Deformationseinrichtungen (6) zur bewegungsdämpfenden Lastaufnahme längs eines Bewegungsweges materialdeformierend verstellt wird.

22. Verstellverfahren für eine Lenksäule nach Anspruch 21, **dadurch gekennzeichnet, dass** ein Antrieb der Verstelleinrichtungen (3) zum Bewirken der Bewegung zumindest des Lenkrad-Endbereiches (2) der Lenksäule (1) vom Insassen weg im Falle eines Unfalls in Abhängigkeit von den Insassenparametern ausgelöst wird.

23. Verstellverfahren für eine Lenksäule nach Anspruch 21 oder 22, **dadurch gekennzeichnet, dass** eine Bewegung zumindest des Lenkrad-Endbereiches (2) der Lenksäule (1) von einem Insassen weg im Falle eines Unfalls in Abhängigkeit von den Insassenparametem gedämpft wird.

24. Verstellverfahren für eine Lenksäule nach Anspruch 23, **dadurch gekennzeichnet, dass** eine Dämpfung der Bewegung zumindest des Lenkrad-Endbereiches (2) der Lenksäule (1) von einem Insassen weg im Falle eines Unfalls in Abhängigkeit von den Insassenparametem abgeschaltet wird.

25. Verstellverfahren für eine Lenksäule nach Anspruch 23, **dadurch gekennzeichnet, dass** das Abschalten der Dämpfung der Bewegung zumindest des Lenkrad-Endbereiches (2) der Lenksäule (1) von einem Insassen weg im Falle eines Unfalls in Abhängigkeit von den Insassenparametem wahlweise in einzelnen Stufen (A, B) abgeschaltet wird.

26. Verstellverfahren für eine Lenksäule nach einem der Ansprüche 21 bis 25, **dadurch gekennzeichnet, dass** die Sitzposition, der Angurtzustand, die Grösse, das Gewicht und/oder die Körperhaltung des Insassen als Insassenparameter erfaßt werden/wird.

27. Verstellverfahren für eine Lenksäule nach Anspruch 26, **dadurch gekennzeichnet, dass** die Verstelleinrichtungen (3) in Abhängigkeit von der Sitzposition des Insassen angetrieben werden.

28. Verstellverfahren für eine Lenksäule nach Anspruch 27, **dadurch gekennzeichnet, dass** die Verstelleinrichtungen (3) im Falle eines Unfalls bei einem erfaßten vorgebbaren Abstand oder einer erfaßten Unterschreitung eines vorgebbaren Abstandes der Position des Sitzes (4) für den Insassen vom Lenkrad gemäß einem Betriebsmodus nicht angetrieben werden.

29. Verstellverfahren für eine Lenksäule nach einem der Ansprüche 26 bis 28, **dadurch gekennzeichnet, dass** die Verstelleinrichtungen (3) in Abhängigkeit vom Angurtzustand und/oder von der Sitzposition des Insassen gedämpft werden.

30. Verstellverfahren für eine Lenksäule nach Anspruch 29, **dadurch gekennzeichnet, dass** die Verstelleinrichtungen (3) im Falle eines Unfalls bei einem nicht angegurteten Insassen gemäß einem Betriebsmodus ganz oder teilweise gedämpft werden.

31. Verstellverfahren für eine Lenksäule nach Anspruch 29 oder 30, **dadurch gekennzeichnet, dass** die Verstelleinrichtungen (3) im Falle eines Unfalls bei einem erfaßten vorgebbaren Abstand oder einer erfaßten Unterschreitung eines vorgebbaren Abstandes der Position des Sitzes (4) für den Insassen vom Lenkrad gemäß einem Betriebsmodus ganz oder teilweise gedämpft werden.

## Claims

1. A steering column for a vehicle, with adjusting means (3) adapted to be triggered in the event of an accident in order to move at least a steering wheel end zone (2) of the steering column (1) away from an occupant, the adjusting means (3) comprising load taking means (7) to damp a movement at least of the steering wheel end zone (2) of the steering column (1) away from an occupant and being designed for at least two operating modes, a control means (5) being provided to detect occupant parameters by detection means (6) and trigger one mode of operation of the adjusting means (3) in dependence on the occupant parameters, **characterised in that** the load taking means (7) comprise deformation means (6) which are brought into or out of operation by the control means (5) in dependence on the occupant parameters in order to effect a specific mode of operation of the adjusting means, and
**in that** the deformation means (6) comprise bolts (10, 11) which have a material deforming effect along a movement path.

2. A steering column according to claim 2, **characterised in that** the adjusting means (3) comprise drive means (23) to effect the movement at least of the steering wheel end zone (2) of the steering column (1) away from an occupant, and **in that** the drive means (23) are triggerable by the control means (5) in dependence on the occupant parameters in the event of an accident.

3. A steering column according to claim 2, **characterised in that** the drive means comprise a pyrotechnic gas generator (20; 32) and/or are electrically triggerable.

4. A steering column according to any one of claims 1 to 3, **characterised in that** the adjusting means (3) comprise load taking means (7) to damp a movement at least of the steering wheel end zone (2) of the steering column (1) away from an occupant, and
**in that** the load taking means (7) are adapted to be operated directly or indirectly by the control means (5) in dependence on the occupant parameters in the event of an accident.

5. A steering column according to claim 4, **characterised in that** the load taking means (7) comprise at least two stages (A, B) which in the event of an accident are adapted to be operated directly or indirectly by the control means (5) in dependence on the occupant parameters.

6. A steering column according to claim 5, **characterised in that** the stages (A, B) of the load taking means (7) are adapted to be operated individually or simultaneously with added load taking properties.

7. A steering column according to claim 6, **characterised in that** the stages (A, B) of the load taking means (7) each have different load taking properties.

8. A steering column according to any one of claims 4 to 7, **characterised in that** the load taking means (7) or if desired each stage (A, B) thereof are adapted to be disconnected directly or indirectly by the control means (5) in dependence on the occupant parameters in the event of an accident.

9. A steering column according to any one of claims 4 to 8, **characterised in that** the load taking means (7) or if desired a stage (A, B) thereof comprise deformation means (6) with cutting knives (36) which remove material along a movement path, and/or comprise braking means.

10. A steering column according to claim 9, **characterised in that** the braking means comprise a brake carriage.

11. A steering column according to claim 10, **characterised in that** the brake carriage comprises at least two braking force stages.

12. A steering column according to any one of the preceding claims, **characterised in that** the control means (5) is designed to detect the seat position, the belted state, the size, weight and/or body attitude of the occupant by the detection means (6).

13. A steering column according to claim 12 in conjunction with either claim 2 or 3, **characterised in that** the control means (5) is designed to trigger the drive means (23) in dependence on the occupant's seat position.

14. A steering column according to claim 13, **characterised in that** the control means (5) is designed to detect a predeterminable distance or an undershoot of a predeterminable distance of the position of the seat (4) for the occupant from the steering wheel by the detection means (6).

15. A steering column according to claim 14, **characterised in that** the control means (5) is designed to trigger a mode of operation of the adjusting means (3) such that in the event of an accident the drive means (23) of the adjusting means (3) are triggered in the event of detection of a predeterminable distance or a detected undershoot of a predeterminable distance of the position of the seat (4) for the occupant from the steering wheel.

16. A steering column according to claim 14 or 15 in conjunction with any one of claims 4 to 11, **characterised in that** the control means (5) is designed to operate the load taking means (7) or if desired each stage (A, B) thereof individually in dependence on the belted state and/or seat position of the occupant.

17. A steering column according to claim 16, **characterised in that** the control means (5) is designed to trigger a mode of operation of the adjusting means (3) such that in the event of an accident the load taking means (7) or at least one stage (A, B) thereof is/are operative in the event of an occupant not being belted.

18. A steering column according to claim 16 or 17, **characterised in that** the control means (5) is designed to trigger a mode of operation of the adjusting means (3) such that in the event of an accident the load taking means (7) or at least one stage (A, B) thereof is/are inoperative in the event of detection of a predeterminable distance or a detected undershoot of a predeterminable distance of the position of the seat (4) for the occupant from the steering wheel.

19. A steering column according to any one of the preceding claims, **characterised in that** the detection means (6) comprise position recognition means (16) of the seat (4) for the occupant, state recognition means (13) of the belt lock (14) for the occupant's safety belt, size, weight and/or body attitude recognition means in respect of the occupant.

20. A steering column according to claim 19, **characterised in that** the position recognition means (16) of the seat (4) for the occupant comprise at least one electric or optical switch (17) in or in conjunction with seat guide rails (18), and/or **in that** the state recognition means (13) of the belt lock (14) for the occupant's safety belt comprise at least one electric or optical lock utilisation switch (15).

21. A method of adjusting a steering column (1) of a motor vehicle, wherein in the event of an accident at least a steering wheel end zone (2) of the steering column (1) is moved away from an occupant by adjusting means (3), wherein detection means (6) detect occupant parameters and wherein the movement at least of the steering wheel end zone (2) of the steering column (1) away from the occupant is effected by a control means (5) in dependence on the occupant parameters in accordance with one mode of operation out of a plurality of modes of operation of the adjusting means (3),
**characterised in that** in order to obtain a specific mode of operation of the adjusting means (3) deformation means (6) for movement-damping load taking are brought into or out of operation by the control means (5) in dependence on the occupant parameters and
**in that** when the deformation means are operative at least one bolt (10, 11) of the deformation means (6) is adjusted with material deformation in the event of an accident for the purpose of movement-damping load-taking along a movement path.

22. A method of adjusting a steering column according to claim 21, **characterised in that** a drive of the adjusting means (3) is triggered in order to effect the movement of at least the steering wheel end zone (2) of the steering column (1) away from the occupant in the event of an accident in dependence on the occupant parameters.

23. A method of adjusting a steering column according to claim 21 or 22, **characterised in that** a movement at least of the steering wheel end zone (2) of the steering column (1) away from an occupant is damped in dependence on the occupant parameters in the event of an accident.

24. A method of adjusting a steering column according to claim 23, **characterised in that** damping of the movement at least of the steering wheel end zone (2) of the steering column (1) away from an occupant is disconnected in dependence on the occupant parameters in the event of an accident.

25. A method of adjusting a steering column according to claim 23, **characterised in that** the disconnection of the damping of the movement at least of the steering wheel end zone (2) of the steering column (1) away from an occupant is disconnected in the event of an accident in dependence on the occupant parameters in individual stages (A, B) if desired.

26. A method of adjusting a steering column according to any one of claims 21 to 25, **characterised in that** the seat position, the belted state, the size, weight and/or body attitude of the occupant is/are detected as occupant parameters.

27. A method of adjusting a steering column according to claim 26, **characterised in that** the adjusting means (3) are driven in dependence on the occupant's seat position.

28. A method of adjusting a steering column according to claim 27, **characterised in that** the adjusting means (3) are not driven according to one mode of operation in the event of an accident in the event of detection of a predeterminable distance or a detected undershoot of a predeterminable distance of the position of the seat (4) for the occupant from the steering wheel.

29. A method of adjusting a steering column according to any one of claims 26 to 28, **characterised in that** the adjusting means (3) are damped in dependence on the belted state and/or the seat position of the occupant.

30. A method of adjusting a steering column according to claim 29, **characterised in that** the adjusting means (3) are completely or partially damped according to one mode of operation in the event of an accident if an occupant is not belted.

31. A method of adjusting a steering column according to claim 29 or 30, **characterised in that** the adjusting means (3) are completely or partially damped according to one mode of operation in the event of an accident in the event of detection of a predeterminable distance or a detected undershoot of a predeterminable distance of the position of the seat (4) for the occupant from the steering wheel.

## Revendications

1. Colonne de direction pour un véhicule, comportant des dispositifs de déplacement (3) qui sont susceptibles d'être déclenchés en cas d'accident pour déplacer au moins une zone d'extrémité (2) côté volant de la colonne de direction (1) en éloignement d'un occupant; les dispositifs de déplacement (3) comprenant des dispositifs d'encaissement de charge (7) pour amortir un mouvement au moins de la zone d'extrémité (2) côté volant de la colonne de direction (1) en éloignement d'un occupant et étant conçus pour au moins deux modes de fonctionnement, une commande (5) étant prévue pour détecter des paramètres relatifs à l'occupant au moyen de dispositifs de détection (6) et pour déclencher un mode de fonctionnement des dispositifs de déplacement (3) en fonction des paramètres relatifs à l'occupant,
**caractérisée en ce que**
les dispositifs d'encaissement de charge (7) comprennent des dispositifs de déformation (6) qui sont activés ou désactivés au moyen de la commande (5) en fonction des paramètres relatifs à l'occupant pour réaliser un mode de fonctionnement déterminé des dispositifs de déplacement (3), et
**en ce que** les dispositifs de déformation (6) comprennent des goujons (10, 11) qui déforment le matériau le long d'une course de déplacement.

2. Colonne de direction selon la revendication 1, **caractérisée en ce que** les dispositifs de déplacement (3) comprennent des dispositifs d'entraînement (23) pour provoquer le déplacement au moins de la zone d'extrémité (2) côté volant de la colonne de direction (1) en éloignement d'un occupant, et
**en ce qu'**en cas d'accident les dispositifs d'entraînement (23) sont susceptibles d'être déclenchés par la commande (5) en fonction des paramètres relatifs à l'occupant.

3. Colonne de direction selon la revendication 2, **caractérisée en ce que** les dispositifs d'entraînement comprennent un générateur de gaz pyrotechnique (20 ; 32) et/ou sont susceptibles d'être déclenchés par voie électrique.

4. Colonne de direction selon l'une des revendications 1 à 3, **caractérisée en ce que** les dispositifs de déplacement (3) comprennent des dispositifs d'encaissement de charge (7) pour amortir un mouvement au moins de la zone d'extrémité (2) côté volant de la colonne de direction (1) en éloignement d'un occupant, et **en ce qu'**en cas d'accident les dispositifs d'encaissement de charge (7) peuvent être amenés à fonctionner directement ou indirectement par la commande (5) en fonction des paramètres relatifs à l'occupant.

5. Colonne de direction selon la revendication 4, **caractérisée en ce que** les dispositifs d'encaissement de charge (7) comprennent au moins deux étages (A, B) qui, en cas d'accident, peuvent être amenés à fonctionner directement ou indirectement par la commande (5) en fonction des paramètres relatifs à l'occupant.

6. Colonne de direction selon la revendication 5, **caractérisée en ce que** les étages (A, B) des dispositifs d'encaissement de charge (7) sont susceptibles d'être amenés à fonctionner individuellement ou simultanément avec addition de leurs propriétés d'encaissement de charge.

7. Colonne de direction selon la revendication 6, **caractérisée en ce que** les étages (A, B) des dispositifs d'encaissement de charge (7) présentent chacun des propriétés d'encaissement de charge différentes.

8. Colonne de direction selon l'une des revendications 4 à 7, **caractérisée en ce qu'**en cas d'accident, les dispositifs d'encaissement de charge (7) ou le cas échéant chaque étage (A, B) individuellement peuvent être coupés directement ou indirectement par la commande (5) en fonction des paramètres relatifs à l'occupant.

9. Colonne de direction selon l'une des revendications 4 à 8, **caractérisée en ce que** les dispositifs d'encaissement de charge (7) ou le cas échéant un étage (A, B) de ceux-ci comprennent des dispositifs de déformation (6) avec des lames de coupe (36) enlevant des copeaux le long d'une course de déplacement et/ou comprennent des dispositifs de freinage.

10. Colonne de direction selon la revendication 9, **caractérisée en ce que** les dispositifs de freinage comprennent un chariot de freinage.

11. Colonne de direction selon la revendication 10, **caractérisée en ce que** le chariot de freinage présente au moins deux étages de force de freinage.

12. Colonne de direction selon l'une des revendications précédentes, **caractérisée en ce que** la commande (5) est conçue pour détecter au moyen des dispositifs de détection (6) la position assise, l'état d'application de ceinture, la taille, le poids et/ou la posture corporelle de l'occupant.

13. Colonne de direction selon la revendication 12 en combinaison avec l'une ou l'autre des revendications 2 et 3, **caractérisée en ce que** la commande (5) est conçue pour déclencher les dispositifs d'entraînement (23) en fonction de la position assise de l'occupant.

14. Colonne de direction selon la revendication 13, **caractérisée en ce que** la commande (5) est conçue pour détecter au moyen des dispositifs de détection une distance prédéterminée ou un passage au-dessous d'une distance prédéterminée de la position du siège (4) pour l'occupant par rapport au volant.

15. Colonne de direction selon la revendication 14, **caractérisée en ce que** la commande (5) est conçue pour déclencher un mode de fonctionnement des dispositifs de déplacement (3), dans lequel, en cas d'accident, les dispositifs d'entraînement (23) des dispositifs de déplacement (3) sont déclenchés lors de la détection d'une distance prédéterminée ou de la détection d'un passage au-dessous d'une distance prédéterminée de la position du siège (4) pour l'occupant par rapport au volant.

16. Colonne de direction selon l'une ou l'autre des revendications 14 et 15 en combinaison avec l'une des revendications 4 à 11, **caractérisée en ce que** la commande (5) est conçue pour faire fonctionner les dispositifs d'encaissement de charge (7) ou le cas échéant chaque étage (A, B) individuellement en fonction de l'état d'application de ceinture et/ou de la position assise de l'occupant.

17. Colonne de direction selon la revendication 16, **caractérisée en ce que** la commande (5) est conçue pour déclencher un mode de fonctionnement des dispositifs de déplacement (3) dans lequel, en cas d'accident et en présence d'un occupant non attaché, les dispositifs d'encaissement de charge (7) ou au moins un étage (A, B) de ceux-ci est ou sont actif(s).

18. Colonne de direction selon l'une ou l'autre des revendications 16 et 17, **caractérisée en ce que** la commande (5) est conçue pour déclencher un mode de fonctionnement des dispositifs de déplacement (3), dans lequel, en cas d'accident, lors de la détection d'une distance déterminée ou de la détection d'un passage au-dessous d'une distance prédéterminée de la position du siège (4) pour l'occupant par rapport au volant, les dispositifs d'encaissement de charge (7) ou au moins un étage (A, B) de ceux-ci est ou sont inactif(s).

19. Colonne de direction selon l'une des revendications précédentes, **caractérisée en ce que** les dispositifs de détection (6) comprennent des dispositifs de reconnaissance de position (16) du siège (4) pour l'occupant, des dispositifs de reconnaissance d'état (13) du verrou de ceinture (14) pour la ceinture de sécurité de l'occupant, des dispositifs de reconnaissance de taille, de poids et/ou de posture corporelle par rapport à l'occupant.

20. Colonne de direction selon la revendication 19, **caractérisée en ce que** les dispositifs de reconnaissance de position (16) du siège (4) pour l'occupant comprennent au moins un commutateur électrique ou optique (17) dans ou en relation avec des rails de guidage de siège (18), et/ou **en ce que** les dispositifs de reconnaissance d'état (13) du verrou de ceinture (14) pour la ceinture de sécurité de l'occupant comprennent au moins un commutateur électrique ou optique (15) relatif à l'utilisation du verrou.

21. Procédé de déplacement pour une colonne de direction (1) d'un véhicule automobile, dans lequel, en cas d'accident, au moins une zone d'extrémité (2) côté volant de la colonne de direction (1) est déplacée en éloignement d'un occupant au moyen de dispositifs de déplacement (3), des paramètres relatifs à l'occupant sont détectés au moyen de dispositifs de détection (6), et le déplacement au moins de la zone d'extrémité (2) côté volant de la colonne de direction (1) en éloignement de l'occupant s'effectue au moyen d'une commande (5) en fonction des paramètres relatifs à l'occupant suivant un mode de fonctionnement parmi plusieurs modes de fonctionnement des dispositifs de déplacement (3),
**caractérisé en ce que**
pour réaliser un certain mode de fonctionnement des dispositifs de déplacement (3), des dispositifs de déformation (6), destinés à l'encaissement de charge avec amortissement des mouvements, sont activés ou désactivés au moyen de la commande (5) en fonction des paramètres relatifs à l'occupant, et
**en ce que**, lorsque les dispositifs de déformation sont actifs, en cas d'accident, au moins un goujon (10, 11) des dispositifs de déformation (6) est déplacé en déformant le matériau le long d'une course de déplacement pour l'encaissement de charge amortissant les mouvements.

22. Procédé de déplacement pour une colonne de direction selon la revendication 21, **caractérisé en ce qu'**un entraînement des dispositifs de déplacement (3) est déclenché en cas d'accident en fonction des paramètres relatifs à l'occupant pour provoquer le déplacement au moins de la zone d'extrémité (2) côté volant de la colonne de direction (1) en éloignement de l'occupant.

23. Procédé de déplacement pour une colonne de direction selon l'une ou l'autre des revendications 21 et 22, **caractérisé en ce qu'**un déplacement au moins de la zone d'extrémité (2) côté volant de la colonne de direction (1) en éloignement d'un occupant en cas d'accident est amorti en fonction des paramètres relatifs à l'occupant.

24. Procédé de déplacement pour une colonne de direction selon la revendication 23, **caractérisé en ce qu'**un amortissement du déplacement au moins de la zone d'extrémité (2) côté volant de la colonne de direction (1) en éloignement d'un occupant en cas d'accident est coupé en fonction des paramètres relatifs à l'occupant.

25. Procédé de déplacement pour une colonne de direction selon la revendication 23, **caractérisé en ce que** la coupure de l'amortissement du déplacement au moins de la zone d'extrémité (2) côté volant de la colonne de direction (1) en éloignement d'un occupant en cas d'accident est réalisée en fonction des paramètres relatifs à l'occupant, et ceci au choix dans des étages individuels (A, B).

26. Procédé de déplacement pour une colonne de direction selon l'une des revendications 21 à 25, **caractérisé en ce que** la position assise, l'état d'application de ceinture, la taille, le poids et/ou la posture corporelle de l'occupant est ou sont détecté(s) comme paramètres relatifs à l'occupant.

27. Procédé de déplacement pour une colonne de direction selon la revendication 26, **caractérisé en ce que** les dispositifs de déplacement (3) sont amenés à fonctionner en fonction de la position assise de l'occupant.

28. Procédé de déplacement pour une colonne de direction selon la revendication 27, **caractérisé en ce qu'**en cas d'accident, lors de la détection d'une distance prédéterminée ou de la détection d'un passage au-dessous d'une distance prédéterminée de la position du siège (4) pour l'occupant par rapport au volant, les dispositifs de déplacement (3) ne sont pas amenés à fonctionner suivant un mode de fonctionnement.

29. Procédé de déplacement pour une colonne de direction selon l'une des revendications 26 à 28, **caractérisé en ce que** les dispositifs de déplacement (3) sont amortis en fonction de l'état d'application de ceinture et/ou de la position assise de l'occupant.

30. Procédé de déplacement pour une colonne de direction selon la revendication 29, **caractérisé en ce qu'**en cas d'accident et en présence d'un occupant non attaché, les dispositifs de déplacement (3) sont amortis complètement ou partiellement suivant un mode de fonctionnement.

31. Procédé de déplacement pour une colonne de direction selon l'une ou l'autre des revendications 29 et 30, **caractérisé en ce qu'**en cas d'accident, lors de la détection d'une distance prédéterminée ou de la détection d'un passage au-dessous d'une distance prédéterminée de la position du siège (4) pour l'occupant par rapport au volant, les dispositifs de déplacement (3) sont amortis complètement ou partiellement suivant un mode de fonctionnement.
